# EUROPÄISCHE PATENTANMELDUNG

(11) **EP 3 269 901 A1**
(43) Veröffentlichungstag der Anmeldung: **17.01.2018**
(21) Anmeldenummer: 17001209.0
(22) Anmeldetag: 17.07.2017
(51) Int. Cl.: E04H 15/54, B32B 5/26, B32B 27/12, D04H 1/4218

(54) **VERBESSERTES INDUSTRIEZELT UND PLANENVERBUND**

(30) Priorität: 15.07.2016 DE 202016004338 U
(71) Anmelder: Herchenbach Industrie-Zeltebau GmbH, 53773 Hennef (DE)
(72) Erfinder: PUCK, Karsten, 50859 Köln (DE)
(74) Vertreter: Lüdcke, Joachim Moritz

(57) **Zusammenfassung**

Es wird ein verbessertes Industriezelt mit einer weichen Dachhaut und ein Planenverbund (13, 13', 13") insbesondere für ein Industriezelt mit einer weichen Dachhaut vorgeschlagen, mit einer der Umgebung (16) auszusetzenden Außenseite und einer der Außenseite gegenüberliegenden Innenseite, wobei die Außenseite durch eine Außenplane (18) gebildet ist und der Planenverbund (13, 13', 13") innenseitig von der Außenplane (18) eine Lage eines textilen Flächenerzeugnisses (20) aus Glasfasern umfasst.

## Beschreibung

Die Erfindung betrifft ein Industriezeit mit einer weichen Dachhaut und einen Planenverbund. Solche Industriezelte werden auch als Industriezelthalle oder als Leichtbauhalle bezeichnet. Solche Bauwerke umfassen üblicherweise ein Traggerüst aus Metallprofilen, insbesondere aus Leichtmetallprofilen, und eine weiche Dachhaut aus einem Planenmaterial. Diese Bauten lassen sich auf befestigtem Untergrund ohne besondere Fundamente errichten und sind üblicherweise für eine begrenzte zeitliche Nutzung vorgesehen. Sie können nach Ende der Nutzung abgebaut und anderen Orts wieder aufgebaut, versetzt oder erweitert werden. Das Traggerüst ist möglichst einfach gehalten und umfasst üblicherweise eine Firstpfette, je nach Baubreite eine oder mehrere Mittelpfetten, Traufpfetten sowie Dachriegel, die die Pfetten tragen und sich auf Wandstützen abstützen. Die Stützen ruhen auf Ankerplatten, die je nach Beschaffenheit des Untergrundes mit Erdnägeln festgelegt oder mit Schwerlastankern gedübelt sind. Die gegenüberliegenden Traufen sind mit Zugverbänden verbunden und die Steifigkeit wird mittels Windverbänden hergestellt.

Geeignete Leichtmetallprofile für das Traggerüst sind beispielsweise aus der DE 20 2005 005 459 U1 bekannt. Die Dachriegel weisen vorteilhaft Nuten zur Aufnahme einer Keder der Dachplane auf, so dass die Dachplane direkt in die Dachriegel eingezogen werden kann und nicht separat verspannt werden muss. Bei Einzug der Dachplane von Traufe zu Traufe steht unmittelbar eine dichte Dachhaut zur Verfügung. Solche Profile sind auch aus der DE 27 19 490 C2 bekannt. Die Verbesserung der Konstruktion solcher Industriezelte und Leichtbauhallen ist Gegenstand zahlreicher früherer Erfindungen, z.B. offenbart die DE 29 28 751 C2 ein Traggerüst für ein Zelt mit speziellen Verbindungsformteilen, die DE 80 13 194 U1 Einlagen für Profilstäbe, die DE 83 15 104 U1 einen Riegel-Stiel-Verbinder mit einem Riegeleinsteckprofil und die DE 20 2011 108 692 U1 ein Hohlprofil und ein Hallengerüst aus einem solchen Hohlprofil. Die DE 30 27 628 A1 beschreibt ein Profil mit einem Querschnitt, der annähernd einem auf dem Kopf stehenden "T" entspricht, wobei Profilverbreiterungen zur Aufnahme von Pfetten dienen und speziell ausgestaltet sind zur Ableitung von Kondenswasser. Die DE 79 23 460 U1 beschreibt einen ähnlich gestalteten Dachbinder. Die WO 200fi1047864 A1 zeigt Profilstäbe in Form von Doppel-T-Profilen für eine Zeltkonstruktion mit Flanschen bzw. angeschraubten Winkelkonsolen zur Befestigung der Spreader (Pfetten). Die DE 10 2011 083 638 A1 beschreibt ebenfalls eine Wand- oder Dachkonstruktion für eine Industriehalle. In der US 2008/0115455 A1 wird eine Halle oder Zeltkonstruktion vorgeschlagen, bei der die Riegel über Wand- und Dachtafelelemente miteinander verbunden werden. Die Tafelelemente sind Teile der tragenden Struktur und sollen zudem aus Kunststoffhartschaum mit Beplankung aus Holz oder Kunststoffinrelltafeln bestehen.

Die eingangs erwähnten Industriezelte werden nicht nur für industrielle Zwecke, z.B. als Lagerhalle, sondern auch für viele andere Zwecke eingesetzt, beispielsweise für die Gepäckabfertigung auf Flughäfen, z.B. während der Sanierung eines Terminalgebäudes, im Groß- und Einzelhandel als Saison-Verkaufshalle oder bei Neubau eines Verkaufsgebäudes, als Verkaufshalle im Kraftfahrzeughandel, als Hubschrauber-Hangar oder Werkstatthalle. Für den Einsatz bei besonderen Anforderungen an die Klimatisierung bzw. Kühlung des Innenraumes eines solchen Industriezeltes ist bekannt, die Wandverkleidung mit Isolierpaneelen vorzunehmen. Für das Dach ist aus DE 20 2004 001 154 U1 eine isolierende Dachplane bekannt. Die beschriebene Plane umfasst einen Planenverbund, bei dem die dem Zeltinnenraum zugewandte Innenseite durch eine Innenplane und die der das Industriezelt umgebenden Atmosphäre zugewandte Außenseite durch eine Außenplane gebildet wird. Zwischen Innen- und Außenplane ist wenigstens eine Schicht eines im Wesentlichen Fasern umfassenden Isoliermaterials angeordnet. Vorzugsweise soll das Isoliermaterial den Raum zwischen Innen- und Außenplane nicht vollständig ausfüllen, um ein besonders gutes Isolierverhalten zu erreichen sowie eine Abfuhr sich evtl. bildenden Kondenswassers zu erleichtem.

Aus der DE 44 27 025 A1 ist ein Leichtdach für ein Wohn- oder Nutzgebäude bekannt, wobei das Leichtdach aus etwa parallel zueinander verlaufenden Membranfolien gebildet sein soll. Die untere Membran soll vorher mit einer Wärmedämmung versehen sein. Die geometrische Form einer solchen Plane soll vorzugsweise eine viereckige Form mit abgeschnittenen Ecken aufweisen, so dass sich insgesamt acht Ecken ergeben und die Membranfolie dadurch an acht Stützen oder vier Stützen mit V-förmigen Auslegern befestigt werden kann. Durch die Durchströmbarkeit des Raumes zwischen den beiden Mombranfolien soll ein Hitzestau vermieden werden. Dennoch soll ein solches Dach auch eine gute Wärmeisolierung bieten. Hierzu wird unter anderem vorgeschlagen, zwischen einer dritten Folie und der unteren Membranfolie ein Gaspolster gasdicht einzuschweißen. Als Isolationsgas wird Luft oder Argon vorgeschlagen. Ebenfalls wird vorgeschlagen, dass die obere Membranfolie mit elastischen Wasserleitungen versehen ist, um einen Warmwasserkollektor zu bilden. Weiterhin wird vorgeschlagen, auf der unteren Membranfolie eine Isolationsmatte aus Glasfasern vorzusehen. ,Dabei wird insbesondere darauf abgehoben, dass die Lichtdurchlässigkeit der Glasfasern von ganz besonderer Bedeutung ist, da so eine insgesamt lichtdurchlässige Konstruktion erreicht werden kann. Als Stärke für die Glasfasermatte werden vorzugsweise 20 bis 40 cm oder bis 50 cm Stärke angegeben. Der Abstand der oberen und unteren Membranfolie wird im Hinblick auf zu erwartenden Durchhang bei Belastung durch Schnee oder dergleichen mit zweckmäßig 0,5 bis 0,8 Metern angegeben. Für die Transluzenz der Isolationsmatte wird ein Wert von 40 bis 70 % angegeben. Schließlich ist noch beschrieben, dass die untere Membranfolie durch eine Isolierglaslage ausgebildet sein kann, die auf Rollen lagernd in Stahlschienen verschiebbar vorgesehen sein soll, vorzugsweise mit einem elektromotorischen Antrieb. Aufgrund der Aufhängung dieses Leichtdaches an einer Zeltstangenkonstruktion, die das Leichtdach nur an einzelnen Punkten unterstützt, ist dieses beschriebene Leichtdach nur zur Überdeckung von mit festen Wänden ausgestatteten Gebäuden geeignet und gemäß der Offenbarung dieser Schrift auch insbesondere für die Überdachung von Atrium-Innenhöfen von herkömmlichen Gebäuden vorgesehen.

Das in DE 44 27 025 A1 beschriebene Leichtdach ist hinsichtlich der Fertigung und Montage, die im Wesentlichen an der Baustelle erfolgen muss, extrem aufwändig. In der Schrift selbst wird bereits ausgeführt, dass das dort beschriebene Leichtdach aufwändige Vorarbeiten erfordert. Darüber hinaus sind natürlich solche Leichtdächer stets bezogen auf das individuelle Gebäude, mit dem sie eingesetzt werden sollen, unterschiedlich zu dimensionieren.

Für besondere Anforderungen sind spezielle Ausgestaltungen bekannt, z.B. zur Klärschlammtrocknung aus der DE 10 2011 018 279 A1. In Bezug auf besonderen Brandschutz ist es auch bekannt, Industrie-Leichtbauhallen mit einem festen Dach auszustatten. Dabei finden meist Trapezbleche (Kaltdach) oder Isopaneele (Warmdach) Verwendung, wie sie auch bei konventionellen festen Industriehallenbauten verwendet werden. Die Hoch- und Tiefsicken der Trapezbleche verlaufen vom First zur Traufe, damit das Niederschlagswasser ablaufen kann. Die Erstellung einer dichten Dachhaut aus solchen Paneelen ist allerdings wesentlich aufwendiger als mit Zeltplanen, bedingt durch Befestigungs- und Dichtelemente und den Montageaufwand. Die Mobilität und Anpassungsfähigkeit einer solchen Halle ist gegenüber einem Industriezelt wesentlich eingeschränkt und die ungünstige Lasteinleitung durch die anisotrope Steifigkeit der Dachhaut ist bei der Statik zu berücksichtigen. Dadurch sind die Kosten für eine solche Halle mit fester Dachhaut erheblich höher als für ein Industriezelt mit einer Plane als Dachhaut.

Aus der DE 20 2014 007 735 U1 ist ein Industriezelt der eingangs erwähnten Art bekannt, bei dem unterhalb der die Dachhaut bildenden Plane über wenigstens einen Teil der Dachfläche des Industriezeltes eine Lage aus Metalltafeln angeordnet ist und die Metalltafeln auf die Dachkonstruktion abgestützt sind. Dadurch kann ein herkömmliches Industriezelt mit einer weichen Dachhaut einfach und kostengünstig auch in Bereichen eingesetzt werden, in denen aus brandschutzrechtlicher Sicht ein festes Dach vorgeschrieben ist. Vorteilhaft ist bei dem dort beschriebenen Industriezelt die Möglichkeit, nur einen Teil der Dachfläche mit der Lage an Metalltafeln auszustatten, z.B. den Teil des Industriezeltes, der in einer Abstandsfläche liegt. Damit können die Vorzüge einer besseren Ausnutzung der Aufstellfläche auch in einer Abstandsfläche einerseits und die Vorzüge eines Industriezeltes mit einer Planeneindeckung andererseits besonders wirtschaftlich kombiniert werden.

Aus der DE 43 37 984 A1 ist ein Verbundstoff bekannt, der wenigstens ein textiles Flächengebilde aus Fasern aus synthetischen Polymeren und wenigstens ein textiles Flächengebilde aus Glasfasern umfasst, wobei die textilen Flächengebilde durch Garne aus synthetischen Polymeren mit einer Festigkeit von wenigstens 50 cN/tex miteinander durch Nähen, Wirken oder Nähwirken verbunden sein sollen. Dieser Verbundstoff soll sich besonders als Verstärkungseinlage in Dachbahnen oder Geotextilien eignen. Dazu wird vorgeschlagen, den Verbundstoff mit Bitumen oder Polyvinylchlorid zu tränken und/oder zu beschichten. Dadurch sollen besonders perforationsbeständige und zugfeste Planen oder Geotextilien herstellbar sein.

Auch aus der DE 39 07 472 A1 ist ein Verbundstoff als Flächentragelement für den Außenbereich bekannt, wie es z. B. für überdachte Sportstätten, Freizeitanlagen und Eingangsüberdachungen an Gebäuden eingesetzt wird. Anstelle von geschlossenen Polyestergewebe mit PVC-Beschichtung wird eine Flächentragmembran vorgeschlagen, bei der ein Glasgittergewebe mit einer Maschenweite > 3 mm und auf Siliconbasis imprägniert zwischen zwei Folien aus Fluorkunststoffen festgelegt ist. Dadurch soll ein Flächentragelement für den Außenbereich bereitgestellt werden, das eine hohe Lichtdurchlässigkeit aufweist, witterungsbeständig ist und eine lange Lebensdauer aufweist. Außerdem soll das Flächentragelement beständig gegen ultraviolette Strahlung und nicht brennbar sein, sowie geringes Anschmutzverhalten, hohe Reißfestigkeit und gute Konfektionsfähigkeit aufweisen.

Aus der US 5,357,726 A ist ein Planenmaterial aus einem PTFE imprägniertem textilen Substrat, z.B. Glasfaser, bekannt, bei dem wenigstens eine Seite des Planenmaterials mit einer hydrophoben Schutzschicht versehen ist, vorzugsweise einer PTFE-Folie. Vorzugsweise enthält die Schutzfolie Farbstoffe, Pigmente oder andere Zuschlagstoffe, z.B. Biozide. Das Planenmaterial soll sich besonders für spezielle Anwendungen eignen, wie elektromagnetische Fenster oder Radome.

Die DE 197 31 270 A1 beschreibt ein Bauwerk mit einer Tragkonstruktion und an der Tragkonstruktion gehaltenen Wänden aus flexiblem Material, z.B. Zelt, Tribünenüberdachung, Sichtschutz, bei dem die Wände zumindest teilweise durch eine ballistische Schutzschicht verstärkt sind. Die ballistische Schutzschicht soll aus einer Mehrzahl von miteinander verbundenen textilen Lagen aus hochreißfesten Fasern bestehen und ggf. eine ballistisch wirksame Einlage aus einem formstabilen Material aufweisen, z.B. in Form einer Polycarbonatplatte. Die ballistische Schutzschicht soll in Bahnenformen auf das flexible Material der Wände aufgebracht und mit diesen verbunden sein. Die Wände sollen aus zwei Lagen des flexiblen Materials gebildet und die ballistische Schutzschicht zwischen den Lagen angeordnet sein.

Aus Produktunterlagen der Firma Taconic International Ltd., Niederlassung Deutschland, Hürth, DE, sind Membranen für die Erstellung von Membrandächern bekannt, die für besonders gestaltete Dachkonstruktionen in der Architektur besonders geeignet sein sollen. Diese unter der Marke Solus angebotenen Membranen bestehen aus einem Glasgewebe, das mit einer Basisbeschichtung versehen ist, über die die Steifigkeit der Membran eingestellt und eine Haftvermittlung für die weiteren PTFE-Beschichtungen bereitgestellt wird, sowie mehreren Beschichtungen aus PTFE-Dispersionen mit Additiven. Schließlich wird als oberste Schicht noch eine Deckschicht aus Perfluorethylenpropylen (FEP) aufgetragen, um den Pilzbefall zu vermindern und eine Verschweißung der Membranen zu ermöglichen. Die fertigen Membranen haben Dicken von 220 µm oder 300 µm, bis zu 650 µm, und einen PTFE-Gehalt von ca. 40 % bis über 60 %. Diese Membranen sollen nicht entflammbar sein. Sie sind jedoch sehr teuer und oberhalb von 400°C zersetzt sich PTFE unter Bildung äußerst toxischer fluorhaltiger Zersetzungsprodukte, u.a. Fluorphosgen.

Der Erfindung liegt daher die Aufgabe zugrunde, ein hinsichtlich einer wirtschaftlichen Verwendung verbessertes Industriezelt und einen Planenverbund dafür bereitzustellen. Diese Aufgabe wird erfindungsgemäß gelöst durch einen Planenverbund insbesondere für ein Industriezelt mit einer weichen Dachhaut, mit einer der Umwelt auszusetzenden Außenseite und einer der Außenseite gegenüberliegenden Innenseite, die z.B. einem durch den Planenverbund abzuschließenden Raum zugewandt ist, wobei die Außenseite durch eine Außenplane gebildet ist und der Planenverbund innenseitig von der Außenplane eine Lage eines textilen Flächenerzeugnisses aus Glasfasern umfasst, Die Aufgabe wird ferner erfindungsgemäß gelöst durch ein Industriezelt der eingangs erwähnten Art mit einem solchen Planenverbund. die Innenseite durch eine Innenplane gebildet ist, und wobei zwischen Innen- und Außenplane wenigstens angeordnet ist
Die Anmelderin hat festgestellt, dass mit der erfindungsgemäßen Ausgestaltung ein herkömmliches Industriezelt mit einer weichen Dachhaut einfach und kostengünstig auch in Bereichen eingesetzt werden kann, in denen aus brandschutzrechtlicher Sicht ein festes Dach vorgeschrieben ist. Überraschenderweise können mit der erfindungsgemäßen Ausgestaltung eines Planenverbundes und eines Industriezeltes die Bedingungen für eine brandschutzrechtliche Zulassung als Gebäude mit festem Dach erreicht und mit den besonderen Vorteilen eines herkömmlichen Industriezeltes mit weicher Dachhaut kombiniert werden. Im Vergleich zu einer herkömmlichen Leichtbauhalle mit einem aus Trapezblechen oder Sandwichpaneelen erstellten harten Dach bleiben die Vorteile eines Industriezeltes mit weicher Dachhaut erhalten, nämlich zuverlässige Dichtheit gegen Niederschlagswasser, kürzeste Aufbauzeit und geringerer Aufwand an Montagehilfsmitteln, wie z.B. Gerüst und Sicherheitsnetz, sowie ein geringerer Transport- und Gründungsaufwand. Gegenüber konventionellen einteiligen Verbundmaterialien mit Glasfaserverstärkung weist die erfindungsgemäße Ausgestaltung neben verbesserten Brandschutzeigenschaften den Vorteil erheblich niedrigerer Kosten auf, ferner lässt sich die erfindungemäße Ausgestaltung mit ansonsten für die Verwendung als Dachhaut besonders geeignetem Planenmaterial kombinieren. Weiter werden durch den Planenverbund die Eigenschaften der Außen- und/oder Innenplane bzw. der Isolierplane nicht verändert, so dass eine gesonderte bauaufsichtliche Zulassung nicht benötigt wird.

Entsprechend lassen sich bei einem Industriezelt der Eingangs erwähnten Art ein erfindungsgemäßer Planenverbund und herkömmliche Planen zusammen verwenden, wobei z.B. die Verwendung eines erfindungsgemäßen Planenverbundes nur in einem Teil der Dachfläche erfolgt, für den erhöhte Brandschutzanforderungen bestehen, z.B., weil ein Teil des Industriezeltes in einer Abstandsfläche steht. Damit können die Vorzüge einer besseren Ausnutzung der Aufstellfläche einerseits und die Vorzüge eines herkömmlichen Industriezeltes mit Planeneindeckung andererseits ohne weiteren Errichtungsaufwand kombiniert werden. Schließlich hat die erfindungsgemäße Ausgestaltung gegenüber eine festen Eindeckung noch den großen Vorteil, den Planenverbund wie bei herkömmlichen Planen transluzent auszugestalten, was je nach gewünschter Nutzung den Aufwand einer künstlichen Beleuchtung mit entsprechendem Aufwand für Installation und Versorgung ersparen kann. Damit können die Vorzüge einer besseren Ausnutzung der Aufstellfläche auch in einer Abstandsfläche einerseits und die Vorzüge einer Planeneindeckung andererseits, wie der Einfall von Tageslicht in das Industriezelt, miteinander kombiniert werden, und das auch noch zu besonders geringen Kosten bei Erhalt der Mobilität und der kurzen Aufbauzeiten eines Industriezeltes mit weicher Dachhaut.

Für eine besonders einfache und schnelle Montage umfasst das Traggerüst Dachriegel mit Nuten oder Kederschienen zur Aufnahme von Kedern des Planenverbundes. Besonders zweckmäßig ist es, wenn der Planenverbund zugleich einen Witterungsschutz für den Zeltinnenraum bildet.

Für einfache Anwendungen mit erhöhtem Brandschutz ist es besonders wirtschaftlich, wenn die Lage eines textilen Flächenerzeugnisses aus Glasfasern mittels einer Kleberschicht an der Außenplane weitgehend gegen Verrutschen gesichert festgelegt ist. Dadurch ist einerseits eine brandschutztechnisch verbesserte Variante eines Industriezeltes besonders einfach und schnell auszurüsten, da durch Aufkleben des Flächenerzeugnisses aus Glasfasern auch auf bereits konfektionierte Außenplanen schnell und einfach ein erfindungsgemäßer Planenverbund bzw. ein erfindungsgemäßes Industriezelt mit minimaler Vorratshaltung bedarfsbezogen hergestellt werden kann. Sogar eine nachträgliche Aufrüstung vorhandener Außenplanen bzw. Industriezelte auf einen erfindungsgemäßen Planenverbund bzw. ein erfindungsgemäßes Industriezelt ist möglich, ohne eine komplette neue Dachhaut kaufen zu müssen.

Für erfindungsgemäße Industriezelte, die mehrfach oder nur kurzfristig vermietet werden sollen, kann es vorteilhaft sein, wenn die Lage eines textilen Flächenerzeugnisses aus einem Glasfasergewebe besteht. Durch die glattere Oberfläche eines Glasfasergewebes im Vergleich zu einem Glasfaservlies lässt sich der Planenverbund schneller Montieren bzw. Verpacken, nimmt weniger leicht Schmutz an und lässt sich leichter reinigen.

Für die Nutzung als thermisch isoliertes Isolierzelt mit brandschutzrechtlicher Einstufung als festem Gebäude ist es besonders wirtschaftlich, wenn zwischen Innenplane und der wenigstens einen Lage eines textilen Flächenerzeugnisses aus Glasfasern eine Schicht eines Isoliermaterials angeordnet ist, wobei das Isoliermaterial im Wesentlichen Fasern umfasst sowie dauerhaft wickel- und biegbar ist, wobei die wenigstens eine Schicht des Isoliermaterials gegenüber wenigstens der Innenplane weitgehend gegen Verrutschen gesichert festgelegt ist. Dadurch lässt sich ein Industriezelt mit thermischer Isolierung und erhöhtem Brandschutz praktisch genauso schnell und einfach errichten, wie ein herkömmliches einfaches Industriezelt.

Dafür ist es besonders vorteilhaft, wenn der Planenverbund an wenigstens zwei Seiten Keder zum Einzug des Planenverbundes in korrespondierende Nuten eines Traggerüstes aufweist. Ein solcher Planenverbund lässt sich besonders einfach und stabil herstellen, wenn die wenigstens zwei Keder jeweils mit einer Kederfahne eingefasst sind, wobei zumindest jeweils eines der beiden Enden der Kederfahne mit der Innenplane und zumindest eines mit der Außenplane vernäht und/oder verschweißt und/oder verklebt ist, insbesondere, wenn mit der Naht und/oder Verschweißung und/oder Verklebung auch das Isoliermaterial mit befestigt ist.

Erfindungsgemäß besonders vorteilhaft und in der Herstellung besonders günstig ist dabei, wenn die wenigstens eine Lage eines textilen Flächenerzeugnisses aus einem Glasfaservlies besteht. Die brandschutzrechtlichen Anforderungen an ein festes Dach können überraschend mit einem erfindungsgemäßen Planenverbund erfüllt werden, wenn das Glasfaservlies ein Flächengewicht von etwa 100 g/m² bis 200 g/m², vorzugsweise wischen 110 g/m² und 140 g/m² aufweist. Vorteilhafterweise weist das Glasfaservlies eine Dicke von nicht mehr als 5 mm, vorzugsweise nicht mehr als 2 mm, besonders bevorzugt von 1 mm bis 1,5 mm auf.

Als besonders zweckmäßig hat sich gezeigt, dass das Isoliermaterial Polyesterfasern umfasst, insbesondere Polyesterhohlfasern, vorzugsweise überwiegend aus PETP, insbesondere, wenn das Isoliermaterial ein thermisch gebundenes Vlies aus solchen Polyester- und/oder Polyesterhohlfasern umfasst. Verarbeitungs- und Anwendungseigenschaften können verbessert werden, wenn das Isoliermaterial ein- oder beidseitig kaschiert ist, vorzugsweise die Kaschierung eine Aluminium- und/oder Kunststofffolie umfasst, insbesondere, wenn das Isoliermaterial eine Kaschierung aus einem Polyamidmaterial umfasst.

Als besonders wirtschaftlich wird angesehen, dass die Innenplane ein polyethylenfolienkaschiertes Polypropylengittergewebe umfasst. Für eine dauerhafte Isolierwirkung auch bei ungünstiger Feuchtebelastung ist es vorteilhaft, wenn an wenigstens einer nicht mit Keder versehenen Seite des Planenverbunds einige Entwässerungsöffnungen vorgesehen sind.

Besonders haltbar ist ein erfindungsgemäßer Planenverbund, wenn die Außenplane beidseitig weich-PVC-beschichtet ist und optional mit einem Acrylatlackauftrag versehen ist. Dadurch lassen sich auch die Eigenschaften bezüglich Schneelast verbessern, da auf einem solchermaßen gestalteten Planenverbund auch nasser Schnee besonders leicht abgleitet und Eisansatz weitestgehend vermieden wird.

Für den Einsatz auch als thermisch isoliertes Industriezelt ist es besonders vorteilhaft, wenn der Planenverbund einen, vorzugsweise abnehmbaren, Lappen aufweist und wenigstens Teile des Traggerüstes isolierend durch den Planenverbund und/oder deren Lappen abgedeckt sind. Dadurch lässt sich das Auftreten sogenannter Kältebrücken vermindern. Dazu weist vorteilhaft der Planenverbund an zumindest einem Rand des Planenverbunds wenigstens teilweise entlang eines Keders innen- oder außenseitig einen zumindest mit der Innenplane oder der Außenplane verbundenen, vorzugsweise abnehmbaren, den Keder überdeckenden Lappen auf. Insbesondere weist der Lappen nahe seinem von der Innenplane oder Außenplane entfernten Ende eine Befestigungseinrichtung auf zur lösbaren Befestigung an der Innenplane oder Außenplane eines benachbarten Planenverbunds. Bevorzugt ist die Befestigungseinrichtung ein Element einer Klettverbindung und/oder der Lappen weist im Wesentlichen den gleichen prinzipiellen Aufbau auf, wie der Planenverbund.

Dabei ermöglicht es die Erfindung, in der bisher üblichen Weise einen Kondensattropfschutz durch Einziehen einer Innenplane zu erhalten.

Besonders gut wirtschaftlich umsetzen lässt sich die Erfindung bei einem Industriezelt mit einer weichen Dachhaut, umfassend ein Traggerüst aus Profilstäben, wobei das Traggerüst eine Wandkonstruktion und eine Dachkonstruktion umfasst, und die Dachkonstruktion Pfetten und Riegel umfasst, wobei die Riegel von einer Traufe des Daches zum First verlaufen, wobei ferner zumindest ein Teil der Dachhaut durch einen oben beschriebenen Planenverbund gebildet ist.

Die Erfindung soll nachfolgend unter Bezug auf die beigefügten Zeichnungen anhand von Ausführungsbeispielen näher erläutert werden. Es zeigen:
- Fig. 1: ein schematisch dargestelltes Traggerüst für ein Industriezelt, mit zwischen zwei Pfetten eingezogenem erfindungsgemäßen Planenverbund;
- Fig. 2: eine schematische Querschnittsansicht eines erfindungsgemäßen Planenverbundes mit zusätzlicher Schicht eines Isoliermaterials;
- Fig. 3: eine schematische ausschnittsweise Schnittansicht eines erfindungsgemäßen Industriezeltes mit einem erfindungsgemäßen Planenverbund und einer zusätzlichen Innenplane, wobei der Planenverbund zugleich einen Witterungsschutz für den Zeltinnenraum bildet;
- Fig. 4: eine schematische ausschnittsweise Schnittansicht eines erfindungsgemäßen thermisch isolierten Industriezeltes mit einem erfindungsgemäßen Planenverbund mit zusätzlicher Schicht eines Isoliermaterials und einer zusätzlichen Außenplane, die einen Witterungsschutz für den Zeltinnenraum bildet, und
- Fig. 5: eine schematische ausschnittsweise Schnittansicht eines erfindungsgemäßen Industriezeltes mit einer weiteren Ausführungsform eines erfindungsgemäßen Planenverbunds.

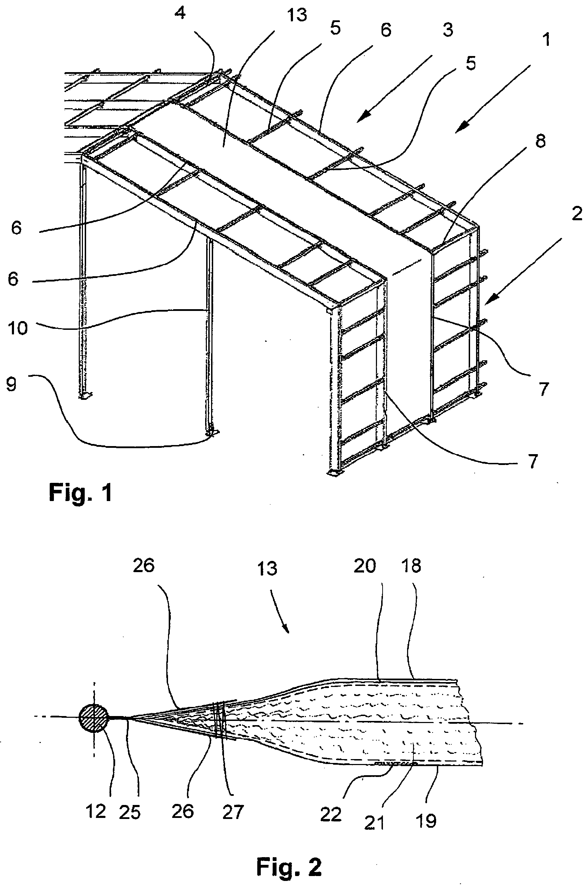

In Figur 1 ist ein Traggerüst 1 aus Profilstäben für ein Industriezelt schematisch dargestellt, wie es an sich aus dem Stand der Technik bekannt ist. Das Traggerüst 1 umfasst eine Wandkonstruktion 2 und eine Dachkonstruktion 3. Die Dachkonstruktion umfasst eine Firstpfette 4, je nach Baubreite eine oder mehrere Mittelpfetten 5 sowie Dachriegel 6, die die Pfetten 4, 5 tragen und sich auf Wandstützen 7 der Wandkonstruktion 2 abstützen, wobei die Riegel 6 von einer Traufe 8 des Daches zum First 4 verlaufen. Die Stützen 7 ruhen auf Ankerplatten 9, die je nach Beschaffenheit des Untergrundes mit Erdnägeln festgelegt oder gedübelt sind. Die gegenüberliegenden Traufpfetten 8 können mit Zugverbänden (nicht dargestellt) in herkömmlicher Weise verbunden werden. Die Steifigkeit wird mittels Windverbänden hergestellt, die der Übersichtlichkeit halber in Figur 1 nicht dargestellt, jedoch z.B. aus DE 20 2013 008 664 U1 der Anmelderin bekannt sind. Je nach Größe des Traggerüsts 1 können auch noch Zwischenstützen 10 vorgesehen sein. Für das Traggerüst 1 können bevorzugt Stahl- und/oder Leichtmetallprofile eingesetzt werden, wobei Leichtmetallprofile bei häufigerem Auf- und Abbau und damit verbundenem Transport besonders vorteilhaft sind.

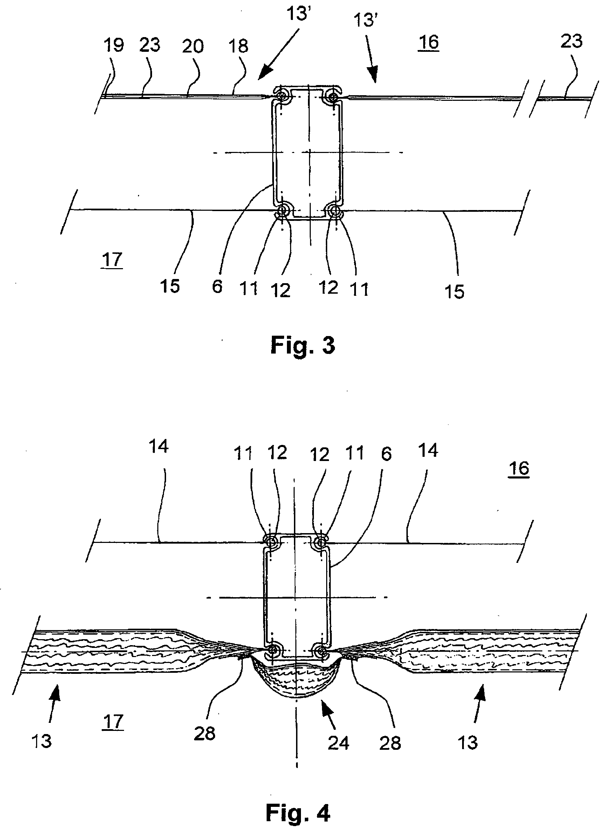

Geeignete Leichtmetall-Profilstäbe für das Traggerüst 1 und insbesondere die Riegel 6 sind beispielsweise aus der DE 20 2005 005 459 U1 bekannt. Die Dachriegel 6, wie sie beispielhaft im Querschnitt in Figuren 3 und 4 zu erkennen sind, weisen vorteilhaft Nuten 11 zur Aufnahme von Kedern 12 einer Dachplane, z.B. in Form eines erfindungsgemäßen Planenverbundes 13, 13', 13", einer herkömmlichen separaten Wetterschutz-Außenplane 14 oder einer zum Schutz gegen herabtropfendes Kondenswasser bekannten herkömmlichen separaten Innenplane 15 auf. Durch diese Anordnung kann der Planenverbund 13, 13', 13" bzw. die Planen 14, 15 direkt in die Dachriegel 6 eingezogen werden und muss nicht separat verspannt werden. Bei Einzug des Planenverbunds 13, 13', 13" von Traufe 8 zu Traufe 8 steht unmittelbar eine dichte weiche Dachhaut zur Verfügung. Der Übersichtlichkeit halber ist hier der Planenverbund 13, 13', 13" nur zwischen First und Boden an einer Wandseite gezeigt. Insgesamt eignet sich ein erfindungsgemäßer Planenverbund 13,13', 13" sowohl als Dacheindeckung, als auch als Wandverkleidung. Besonders schnell errichten lässt sich ein erfindungsgemäßes Industriezelt, wenn ein erfindungemäßer Planenverbund 13, 13', 13" einteilig von Boden zu Boden in die Kedemuten 11 von Stützen 7 und Dachriegel 6 eingezogen wird.

Figur 2 zeigt eine schematische Querschnittsansicht einer Ausführungsform eines erfindungsgemäßen Planenverbundes. Der gezeigte Planenverbund 13 weist eine der (äußeren) Umgebung 16 auszusetzenden Außenseite und einer der Außenseite gegenüberliegende Innenseite auf, die z.B. einem durch den Planenverbund 13, 13' abzuschließenden Innenraum 17 zugewandt ist. Die Außenseite ist durch eine Außenplane 18 und die Innenseite durch eine Innenplane 19 gebildet. Zwischen Innen- und Außenplane 19, 18 ist wenigstens eine Lage eines textilen Flächenerzeugnisses aus Glasfasern in Form eines dünnen Glasfaservlieses 20 angeordnet. Dabei ist das Glasfaservlies 20 unmittelbar an der Innenseite der Außenplane 18 angeordnet, jedoch mit dieser nicht mechanisch verbunden. Zwischen dem Glasfaservlies 20 und Innenplane 19 ist eine zusätzlichen Schicht eines Isoliermaterials 21 angeordnet.

In der in den Figuren 2 und 4 gezeigten besonders bevorzugten Ausführungsform ist das Isoliermaterial 21 gegenüber wenigstens einer von Innen- und Außenplane 19,18 gegen Verrutschen gesichert festgelegt. Hier erfolgt diese Festlegung durch Klettstreifen 22, von denen beispielsweise mehrere an der Innenplane 19 angeklebt, angenäht oder angeschweißt sind. Die als Hakenband ausgebildeten Klettstreifen 22 haften unmittelbar an dem Isoliermaterial 21, speziell, wenn dies mit einem Klettvelours kaschiert ist. Dadurch wird auch bei längerem Gebrauch, beispielsweise auch in vertikaler Anordnung oder bei mehrfachem Zusammenrollen, sichergestellt, dass das Isoliermaterial 21 in weitgehend gleicher Stärke und Isolationsfähigkeit über den gesamten Planenverbund 13 verteilt erhalten bleibt und somit Kältebrücken vermieden werden. Das Glasfaservlies 20 haftet aufgrund seiner Oberflächenstruktur an dem Isoliermaterial 21 und behält dadurch seine Lage relativ zu Außen- und Innenplane 18, 19 bei.

In einer alternativen nicht näher dargestellten Ausführungsform der Erfindung ist das Isoliermaterial 21 kaschiert, insbesondere mit einer Kaschierung aus einer Aluminium- oder Kunststofffolie. Dadurch kann das Isolationsverrnögen durch Reflexion von Infrarotstrahlung verbessert werden und außerdem eine Schwitzwasserbildung innerhalb des Isoliermaterials vermindert werden. In einer weiteren zweckmäßigen Ausführungsform umfasst das Isoliermaterial 21 eine Kaschierung aus einem Polyamidmaterial.

Das Isoliermaterial 21 umfasst vorteilhaft Polyesterfasern, insbesondere Polyesterhohlfasern, vorzugsweise aus PETP. Besonders form- und dimensionsstabil ist das Isoliermaterial 21, wenn das Isoliermaterial 21 ein thermisch gebundenes Vlies aus solchen Polyester- und/oder Polyesterhohlfasern ist. Ein solches Vlies ist nähbar und auch schweißbar und kann beispielsweise durch Oberflächenverschweißung an der Innenplane 19 befestigt werden.

Das Isoliermaterial 21 kann eine Dicke von etwa 20 mm bis etwa 200 mm aufweisen, vorzugsweise um 25, 30, 42, 55, 60, 85, 100, 120, 140 oder 160 mm. Bei einer erfindungsgemäßen Plane wurde bei einer Dicke des Isoliermaterials von 40 mm ein K-Wert von unter 0,75 ermittelt.

Das Glasfaservlies 20 hat ein Flächengewicht von etwa 100 g/m² bis 200 g/m², vorzugsweise wischen 110 g/m² und 140 g/m². Als erfindungsgemäß besonders geeignet hat sich ein Flächengewicht von ca. 120 g/m³ erwiesen. Das Glasfaservlies 20 weist eine Dicke von nicht mehr als 5 mm, vorzugsweise nicht mehr als 2 mm, besonders, bevorzugt von 1 mm bis 1,5 mm, speziell etwa 1,2 mm, auf.

Der in den Figuren dargestellte Planenverbund 13, 13', 13" weist an seinen zwei Längsseiten Keder 12 auf zum Einzug des Planenverbunds 13, 13', 13" in korrespondierende Nuten 11 von Profilstäben des Traggerüsts 1, insbesondere der Riegel 6 und Stützen 7. In den Figuren 3 und 4 ist schematisch eine Anordnung erfindungsgemäßer Planenverbunde 13, 13', 13" an einem Riegel 6 gezeigt. Solche Kedernuten 11 können entweder in einem Tragprofil direkt ausgebildet sein, z.B. bei Aluminiumstrangpressprofilen, und wie bei dem hier dargestellten Riegel 6 gezeigt, oder durch separat angebrachte Kedernutprofile, die beispielsweise an Stahlprofile geschraubt oder genietet, oder an einer Holzkonstruktion angeschraubt sind.

Die wenigstens zwei Keder 12 eines Planenverbundes 13, 13' sind jeweils mit einer Kederfahne 25 eingefasst, wobei jeweils eines der beiden Enden 26 der Kederfahne 25 mit der Innenplane 19 und eines mit der Außenplane 18 vernäht und/oder verschweißt und/oder verklebt ist. Vorzugsweise sind dabei beide Enden 26 der Kederfahne 25 und sowohl Innenplane 19 als auch Außenplane 18 miteinander vernäht, geklebt und/oder verschweißt. Eine Naht 27 ist in Figur 2 angedeutet. Mit der Naht 27 und/oder Verschweißung und/oder Verklebung ist vorteilhaft auch das Glasfaservlies 20 und das Isoliermaterial 21 mit befestigt, wie gut in Figur 2 zu erkennen ist. Dadurch wird eine stabile Ausgestaltung des Planenverbunds 13, 13' erreicht und die Bildung von Isolations- und Brandschutzlücken im Randbereich des Planenverbunds 13, 13' weitgehend vermieden.

Durch die erfindungsgemäße Ausbildung eines Planenverbunds 13, 13', 13" kann eine hohe Brandschutz- und Isolierwirkung erreicht werden. Ein solcher Planenverbund 13, 13', 13" ist leicht in Normbreiten herstellbar, beispielsweise in Breiten von 2,5 m, 3 m, 4 m, 5 m oder 6 m, und ist durch die Keder 12 oder vergleichbare Befestigungsmittel schnell, zuverlässig und praktisch dicht gegenüber Witterungseinflüssen befestigbar durch Einziehen der Keder 12 in die Nuten 11. Die erfindungsgemäße Ausbildung eines Industriezeltes und eines Planenverbundes 13, 13', 13" ermöglicht auch den wiederholten Auf- und Abbau des Industriezeltes, indem der Planenverbund 13, 13', 13" nicht nur leicht montier- und demontierbar ist, sondern auch zum Transport und zur Aufbewahrung gewickelt oder gefaltet werden kann, ohne dass für einen späteren Einsatz die Brandschutz- oder Isolierwirkung verloren geht. Hierzu kann das Isoliermaterial 21 auch beidseitig mit Klettvelours kaschiert sein.

Das Isoliermaterial 21 füllt den Raum zwischen Innen- und Außenplane 19, 18 nicht absolut vollständig aus. Dadurch wird eine Abfuhr sich evtl. bildenden Kondenswassers oder eingetretenem Leckwasser erleichtert, so dass es abfließen kann, ohne das Isoliervermögen zu beeinträchtigen. Bei dem hier in den Figuren 2 und 4 gezeigten Planenverbund 13, der gemäß seinem Aufbau dazu besonders geeignet ist, ein Kühlzelt zu isolieren, bei dem die Innentemperatur in der Regel niedriger ist als die Außentemperatur, würde solches Kondenswasser oder etwaig durch Beschädigung des Planenverbunds 13 eingedrungenes Leckwasser zwischen den Klettstreifen 22 senkrecht zur Zeichenebene nach unten ablaufen und durch nicht näher dargestellte Ablauföffnungen entweichen. Solche Öffnungen können durch einige an wenigstens einer nicht mit Keder 12 versehenen Seite des Planenverbunds 13 angeordnete Entwässerungsöffnungen gebildet sein. Eine Durchnässung des Glasvlieses 20 und des Isoliermaterials 21 ist dadurch sowie durch die erfindungsgemäßen wasserabweisenden Materialien weitestgehend vermieden.

Der in Figur 2 dargestellte Planenverbund 13 wird als äußere witterungsbeaufschlagte Dachplane eingesetzt. Dazu hat es sich als besonders vorteilhaft erwiesen, für die Innenplane 19 ein polyethylenfolienkaschiertes Polypropylengittergewebe und für die Außenplane 18 zweckmäßig ein beschichtetes Polyestergewebe zu verwenden, das beidseitig weich-PVC-beschichtet und vorzugsweise mit einem Acrylatlackauftrag versehen ist. In dieser Ausführungsform ist ein erfindungsgemäßer Planenverbund 13 besonders dauerhaltbar und vor Beschädigung durch Witterungseinflüsse geschützt.

Figur 3 zeigt eine schematische ausschnittsweise Schnittansicht eines erfindungsgemäßen Industriezeltes mit einem erfindungsgemäßen Planenverbund 13' und einer zusätzlichen separaten Innenplane 15 als Schutz gegen abtropfendes Kondensat, wobei der Planenverbund 13' zugleich den Witterungsschutz für einen Zeltinnenraum 17 gegenüber der Umgebung 16 bildet. Der Aufbau des Planenverbunds 13' in Figur 3 entspricht im Prinzip dem aus Figur 2 und der obigen Beschreibung bekannten Aufbau, jedoch ohne das Isoliermaterial 21. Sofern das Glasfaservlies 20 mit in der Kederfahne 25 befestigt ist, ist ein Verrutschen des Glasfaservlieses 20 in dem Planenverbund 13' unwahrscheinlich. Je nach Art des eingesetzten textilen Flächenerzeugnisses aus Glasfasern und der absehbaren mechanischen Beanspruchung, z.B. durch besonders häufiges Auf- und Abbauen eines Industriezeltes, kann es zweckmäßig sein, das Flächenerzeugnis aus Glasfasern, wie hier dem Glasfaservlies 20, z.B. punktuell an der Innenplane 19 des Planenverbundes 13' zu fixieren, z.B. durch je eine kurze Steppnaht 23 je Quadratmeter. Eine solche Fixierung ist in Figur 3 angedeutet. Grundsätzlich kann das Glasfaservlies 20 auch an der Außenplane 18 des Planenverbundes' fixiert werden, jedoch wird die Fixierung an der Innenplane 19 bevorzugt, um eine zuverlässige Dichtheit der Außenplane 18 zu erhalten.

Bei niedrigeren Temperaturen in der Umgebung 16 bildet sich je nach Luftfeuchtigkeit im Innenraum 17 des Industriezeltes Kondensat an der Innenplane 19 des Planenverbundes 13'. Je nach Temperaturgefälle kann Luftfeuchtigkeit auch bereits in der Nähe des Planenverbundes 13' kondensieren. Um zu ermeiden, dass solches Kondensat wie Regen auf z.B. in dem Industriezelt gelagerte Güter tropft, kann zusätzlich eine separate Innenplane 15 vorgesehen werden.

Der in Figur 3 dargestellte Planenverbund 13' wird als äußere witterungsbeaufschlagte Dachplane eingesetzt. Für den gezeigten Planenverbund 13' hat es sich als besonders vorteilhaft erwiesen, für die Innenplane 19 das gleiche Material zu verwenden, wie für die Außenplane 18, zweckmäßig ein Polyestergewebe , das beidseitig weich-PVC-beschichtet und vorzugsweise mit einem Acrylatlackauftrag versehen ist. In dieser Ausführungsform ist ein erfindungsgemäßer Planenverbund 13' besonders dauerhaltbar und vor Beschädigung durch Witterungseinflüsse geschützt.

In Figur 4 ist eine alternative Anordnung eines erfindungsgemäßen Planenverbundes 13 in einem Aufbau eines Industriezeltes beispielhaft dargestellt. Hier wird die Verwendung des Planenverbundes 13 unter einer separaten Wetterschutz-Außenplane 14 gezeigt, die den Planenverbund 13 und den Innenraum 17 des Zeltes witterungsmäßig gegenüber der Umgebung 16 abschirmt. Der Aufbau des gezeigten Planenverbundes 13 entspricht im Prinzip dem Aufbau des Planenverbunds 13, wie er in Figur 2 gezeigt ist. Bei dieser Anwendung können Innenplane 19 und Außenplane 18 ein polyethylenfolienkaschiertes Polypropylengittergewebe umfassen. Dadurch ist eine besonders leichtgewichtige Ausgestaltung eines erfindungsgemäßen Planenverbundes 13 möglich, der sich dementsprechend auch besonders einfach montieren lässt bzw. bei gleichem Handhabungsaufwand eine größere und breitere Planenfläche und damit einen größeren Abstand zwischen benachbarten Riegeln 6 und Stützen 7 ermöglicht. Durch ein breiteres Rastermaß lassen sich daher für ein Industriezelt gegebener Grundfläche die Herstell- und Aufbaukosten senken. Zudem lässt sich eine solche Ausbildung besonders wirtschaftlich herstellen.

Der hier in Figur 4 gezeigte Aufbau eines erfindungsgemäßen Industriezeltes mit einem Planenverbund 13 ist besonders dazu geeignet, ein Kühlzelt zu isolieren, bei dem die Temperatur des Innenraums 17 in der Regel niedriger ist als die Außentemperatur in der Umgebung 16. Die für gattungsgemäße Industriezelte üblicherweise als Stützen 7 und Riegel 6 für das Traggerüst 1 verwendeten Stahl- oder Aluminiumprofile weisen eine sehr hohe Wärmeleitfähigkeit auf. In einer bei größeren Temperaturdifferenzen zwischen Umgebung 16 und Zeltinnenraum 17 besonders wirksamen Ausführungsform, wie sie in Figur 4 dargestellt ist, weist der erfindungsgemäße Planenverbund 13 an zumindest einem Rand des Planenverbundes 13 wenigstens teilweise entlang eines Keders 12 innenseitig einen zumindest mit der Innenplane 19 verbundenen, den Keder 12 überdeckenden, Lappen 24 auf. Der Lappen 24 kann mit seinem einen Ende an der Innenplane 19 angenäht und/oder geschweißt und/oder geklebt sein. Er kann aber auch abnehmbar ausgebildet sein durch einen Klettverschluss 28, wie in Figur 4 schematisch gezeigt. Nahe seinem von der Innenplane 19 entfernten anderen Ende weist der Lappen 24 eine Befestigungseinrichtung auf zur lösbaren Befestigung an der Innenplane 19 eines benachbarten Planenverbundes 13, beispielsweise ebenfalls durch einen Klettverschluss 28. Es ist weiterhin vorteilhaft, wenn der Lappen 24 im Wesentlichen den gleichen prinzipiellen Aufbau aufweist, wie der Planenverbund 13. Eine besonders gute Isolationswirkung wird durch die Vermeidung von Kältebrücken so erreicht, da wenigstens Teile der Profilelemente der Tragstruktur 1, hier am Beispiel eines Riegels 6 gezeigt, isolierend durch den Planenverbund 13 und/oder deren Lappen 24 abgedeckt sind. Dies ist besonders bedeutungsvoll, da insbesondere Industriezelte für den nur vorübergehenden Einsatz regelmäßig eine Tragstruktur 1 aus Stahl- und/oder Aluminiumprofilen aufweisen, die eine besonders hohe Wärmeleitfähigkeit besitzen.

Für besten Brandschutz sollte ein erfindungsgemäßer Planenverbund 13, 13', 13" so montiert werden, dass die Seite, auf der das Glasfaservlies 20 angeordnet ist, zu dem möglichen Brandherd weist.

Erfindungsgemäß lässt sich ein erfindungsgemäßer Planenverbund 13, 13', 13" besonders gut nutzen bei einem Zelt oder einer Leichtbauhalle mit einer statischen tragenden Struktur aus Profilelementen 6, 7 enthaltend Nuten 11 zur Aufnahme von Kedern 12 mit wenigstens einem erfindungsgemäßen Planenverbund 13, 13', 13" als decken- und/oder wandseitigem Abschluss des Zelt- bzw. Halleninnenraums, einschließlich Giebelwänden. Dabei kann es vorteilhaft sein, wenn der erfindungsgemäße Planenverbund 13, 13', 13" innenseitig montiert und durch eine weitere von ihr mit Abstand angeordnete separate Außenplane 14 als Wetterschutzplane witterungsseitig überdeckt ist, wie in Figur 4 zu erkennen ist. Dadurch lässt sich der Isolationsschutz noch einmal verbessern und insbesondere eine besonders hohe Witterungsbeständigkeit erreichen. Weiterhin ist es dadurch möglich, den erfindungsgemäßen Planenverbund 13, 13', 13" beispielsweise bei unvorhergesehenem verlängerten zeitlichen Einsatz eines Industriezeltes, z. B. vor Beginn der kalten Jahreszeit, oder bei für eine geänderte Nutzung mit schärferen Brandschutzanforderungen sogar bei schlechtem Wetter nachträglich zu montieren.

Insbesondere für Zelte zur nur vorübergehenden Nutzung ist es aber auch zweckmäßig, wenn der erfindungsgemäße Planenverbund 13 mit Isoliermaterial 21 entsprechend dem in Figur 2 gezeigten Aufbau eine äußere Plane ist, die zugleich einen Witterungsschutz gegenüber der Umgebung 16 bildet. Ein solches Industriezelt lässt sich mit entsprechend gutem Brand- und Isolationsschutz schnell und einfach auf- und wieder abbauen sowie platz- und kostengünstig lagern.

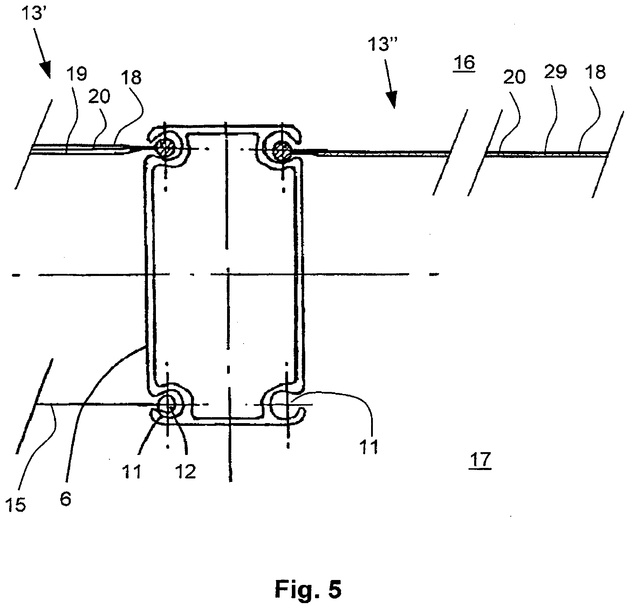

Figur 5 zeigt eine weitere Ausführungsform eines erfindungsgemäßen Planenverbunds 13". Die Darstellung ist hier im Vergleich zu Figur 3 vergrößert, ferner ist die Ausführungsform auf der rechten Seite ohne separate Innenplane 15 gezeigt. Bei dieser Ausführungsform ist die Lage eines textilen Flächenerzeugnisses 20 aus Glasfasern mittels einer Kleberschicht 29 an der Außenplane 18 befestigt. Diese Ausführungsform eignet sich besonders, um kurzfristig ein erfindungsgemäßes Industriezelt mit erhöhtem Brandschutz bereitzustellen, z.B. wenn ein solches Industriezelt aufgrund besonderer Situationen beim Benutzer eilig benötigt wird. Diese Ausführungsform eines erfindungsgemäßen Planenverbunds 13" lässt sich im Bedarfsfall schnell herstellen, indem z.B. vorhandene sogar bereits konfektionierte Außenplanen 18 aus Lagerbestand mit der Lage eines textilen Flächenerzeugnisses 20 aus Glasfasern ausgerüstet werden. Dazu kann beispielsweise eine Außenplane 18 auf einer ebenen Unterlage ausgelegt werden und eine zweckmäßig bereits mit einer Kleberschicht 29 kaschierte Lage eines Glasfaservlieses 20 auf der Innenseite der Außenplane 18 ausgerollt und mittels Andruckrollen angeklebt werden.

Auf diese Weise lassen sich sogar bereits in Verwendung befindliche Außenplanen 18 besonders kostengünstig in einen erfindungsgemäßen Planenverbund 13" ändern.

Soll ein solcher erfindungsgemäßer Planenverbund 13" für eine nur vorübergehend und mehrfach an verschiedenen Orten aufzustellendes erfindungsgemäßes Industriezelt verwendet werden, z.B. zur Vermietung, kann es zweckmäßig sein, für das textile Flächenerzeugnis 20 ein Glasfasergewebe zu verwenden. An der die verhältnismäßig glatten Oberfläche eines Glasfasergewebes setzt sich weniger leicht Schmutz fest, insbesondere Staub, und ein Glasfasergewebe lässt sich nach Gebrauch vor einer Wiederverwendung des Planenverbundes 13" einfacher reinigen als ein Glasfaservlies. Schließlich lässt sich ein erfindungsgemäßer Planenverbund 13" mit einem Glasfasergewebe als textilem Flächenerzeugnis 20 leichter und damit schneller aufrollen, wodurch sich Auf- und Abbauzeiten für ein erfindungsgemäßes Industriezelt verkürzen, was wiederum bei nur kurzfristig eingesetzten Vermietzelten besonders vorteilhaft ist.

Insgesamt können überraschenderweise mit der erfindungsgemäßen Ausgestaltung eines Planenverbundes und eines Industriezeltes die Bedingungen für eine brandschutzrechtliche Zulassung als Gebäude mit festem Dach erreicht und mit den besonderen Vorteilen eines herkömmlichen Industriezeltes mit weicher Dachhaut kombiniert werden. Im Vergleich mit anderen Lösungen zur Verbesserung des Brandschutzes bei Industriezelten ist die erfindungsgemäße Lösung wesentlich vorteilhafter, da eine aufwändige Imprägnierung/Tränkung des textilen Flächenerzeugnisses aus Glasfasern nicht erforderlich ist und insbesondere der Einsatz von PTFE vermieden wird. Damit ist eine erfindungsgemäßer Planenverbund 13, 13', 13" nicht nur wesentlich kostengünstiger in der Herstellung, sondern es werden auch die möglichen Probleme einer Zersetzung von PTFE bei durch Brand entstehenden Temperaturen und die damit verbundenen Freisetzung äußerst toxischer fluorhaltiger Zersetzungsprodukte, u.a. Fluorphosgen, verhindert. Schließlich ist auch die Entsorgung am Ende der Gebrauchsfähigkeit einer weichen Dachhaut für ein Industriezelt bei der erfindungsgemäßen Lösung wesentlich weniger problematisch und das Material eines erfindungsgemäßen Planenverbundes kann zumindest teilweise einer Wiederverwendung zugeführt werden.

### Bezugszeichenliste

- 1: Traggerüst
- 2: Wandkonstruktion
- 3: Dachkonstruktion
- 4: Firstpfette
- 5: Mittelpfette
- 6: Riegel
- 7: Stütze
- 8: Traufe
- 9: Ankerplatte
- 10: Zwischenstütze
- 11: Nut
- 12: Keder
- 13, 13', 13": Planenverbund
- 14: separate Wetterschutz-Außenplane
- 15: separate Innenplane
- 16: Umgebung
- 17: Innenraum
- 18: Außenplane
- 19: Innenplane
- 20: Glasfaservlies
- 21: Isoliermaterial
- 22: Klettverbindung
- 23: Steppnaht
- 24: Lappen
- 25: Kederfahne
- 26: Ende der Kederfahne
- 27: Naht
- 28: Klettverschluss
- 29: Kleberschicht

## Patentansprüche

1. Planenverbund (13, 13', 13") insbesondere für ein Industriezelt mit einer weichen Dachhaut, mit einer der Umgebung (16) auszusetzenden Außenseite und einer der Außenseite gegenüberliegenden Innenseite, wobei die Außenseite durch eine Außenplane (18) gebildet ist und der Planenverbund (13, 13', 13") innenseitig von der Außenplane (18) eine Lage eines textilen Flächenerzeugnisses (20) aus Glasfasern umfasst.

2. Planenverbund (13, 13') nach Anspruch 1, **dadurch gekennzeichnet, dass** die Innenseite durch eine Innenplane (19) gebildet ist, und die Lage eines textilen Flächenerzeugnisses (20) aus Glasfasern zwischen Innen- und Außenplane (19, 18) angeordnet ist.

3. Planenverbund (13, 13', 13") nach Anspruch 1, **dadurch gekennzeichnet, dass** die Lage eines textilen Flächenerzeugnisses (20) aus Glasfasern mittels einer Kleberschicht (29) an der Außenplane (18) weitgehend gegen Verrutschen gesichert festgelegt ist.

4. Planenverbund (13) nach Anspruch 2 oder 3, **dadurch gekennzeichnet, dass** zwischen Innenplane (19) und der Lage eines textilen Flächenerzeugnisses (20) aus Glasfasern eine Schicht eines Isoliermaterials (21) angeordnet ist, wobei das Isoliermaterial (21) im Wesentlichen Fasern umfasst, wobei die wenigstens eine Schicht des Isoliermaterials (21) gegenüber wenigstens der Innenplane (19) weitgehend gegen Verrutschen gesichert festgelegt ist.

5. Planenverbund (13, 13', 13") nach einem der vorhergehenden Ansprüche , **dadurch gekennzeichnet, dass** der Planenverbund (13, 13', 13") an wenigstens zwei Seiten Keder (12) zum Einzug des Planenverbundes (13, 13', 13") in korrespondierende Nuten (11) eines Traggerüstes (1) aufweist.

6. Planenverbund (13, 13') nach einem der Ansprüche 2 oder 4 und 5, **dadurch gekennzeichnet, dass** die wenigstens zwei Keder (12) jeweils mit einer Kederfahne (25) eingefasst sind, wobei zumindest jeweils eines der beiden Enden (26) der Kederfahne (25) mit der Innenplane (19) und zumindest eines mit der Außenplane (18) vernäht und/oder verschweißt und/oder verklebt ist, vorzugsweise ferner, dass mit der Naht (27) und/oder Verschweißung und/oder Verklebung auch das Isoliermaterial (21) mit befestigt ist.

7. Planenverbund (13, 13', 13") nach einem der vorhergehenden Ansprüche, **dadurch gekennzeichnet, dass** die Lage eines textilen Flächenerzeugnisses aus einem Glasfaservlies (20) besteht, wobei vorzugsweise das Glasfaservlies (20) ein Flächengewicht von etwa 100 g/m² bis 200 g/m², besonders bevorzugt zwischen 110 g/m² und 140 g/m² aufweist, und/oder das Glasfaservlies (20) eine Dicke von nicht mehr als 5 mm, vorzugsweise nicht mehr als 2 mm, besonders bevorzugt von 1 mm bis 1,5 mm aufweist.

8. Planenverbund (13") nach den Ansprüchen 1 oder 3, **dadurch gekennzeichnet, dass** die Lage eines textilen Ffächenerzeugnisses (20) aus einem Glasfasergewebe besteht.

9. Planenverbund (13) nach einem der Ansprüche 4 bis 7, **dadurch gekennzeichnet, dass** das Isoliermaterial (21) Polyesterfasern umfasst, insbesondere Polyesterhohlfasern, vorzugsweise überwiegend aus PETP, wobei vorzugsweise das Isoliermaterial (21) ein thermisch gebundenes Vlies aus solchen Polyester- und/oder Polyesterhohlfasern umfasst, insbesondere, dass das Isoliermaterial (21) ein- oder beidseitig kaschiert ist, vorzugsweise die Kaschierung eine Aluminium- und/oder Kunststofffolie umfasst, besonders bevorzugt, dass das Isoliermaterial (21) eine Kaschierung aus einem Polyamidmaterial umfasst.

10. Planenverbund (13, 13') nach einem der Ansprüche 2 bis 9, **dadurch gekennzeichnet, dass** die Lage eines textilen Flächenerzeugnisses (20) aus Glasfasern direkt oder indirekt gegenüber wenigstens der Innenplane (19) weitgehend gegen Verrutschen gesichert festgelegt ist.

11. Planenverbund (13, 13', 13") nach einem der vorhergehenden Ansprüche, **dadurch gekennzeichnet, dass** die Außenplane (18) ein Grundgewebe aus Polyesterfasern umfasst, wobei vorzugsweise die Außenplane (18) beidseitig weich-PVC-beschichtet ist und optional mit einem Acrylatlackauftrag versehen ist.

12. Planenverbund (13) nach einem der Ansprüche 4 bis 7 oder 10, **dadurch gekennzeichnet, dass** die Innenplane (19) ein polyethylenfolienkaschiertes Polypropylengittergewebe umfasst.

13. Planenverbund (13, 13', 13") nach einem der vorhergehenden Ansprüche, **dadurch gekennzeichnet, dass** der Planenverbund (13, 13', 13") an zumindest einem Rand des Planenverbunds (13, 13', 13") wenigstens teilweise entlang eines Keders (12) innen- oder außenseitig einen zumindest mit der Innenplane (19) oder der Außenplane (18) verbundenen, vorzugsweise abnehmbaren, den Keder (12) überdeckenden Lappen (24) aufweist, vorzugsweise, dass der Lappen (24) nahe seinem von der Innenplane (19) oder Außenplane (18) entfernten Ende eine Befestigungseinrichtung (28) aufweist zur lösbaren Befestigung an der Innenplane (19) oder Außenplane (18) eines benachbarten Planenverbunds (13, 13', 13"), wobei bevorzugt die Befestigungseinrichtung ein Element einer Klettverbindung (28) ist, besonders bevorzugt, dass der Lappen (24) im Wesentlichen den gleichen prinzipiellen Aufbau aufweist, wie der Planenverbund (13, 13', 13").

14. Industriezelt mit einer weichen Dachhaut, umfassend ein Traggerüst (1) aus Profilstäben, wobei das Traggerüst (1) zur Befestigung der Dachhaut dient und wobei die Dachhaut über wenigstens einen Teil der Dachfläche des Industriezeltes einen Planenverbund (13, 13', 13") nach einem der vorhergehenden Ansprüche umfasst, wobei die Außenseite die von dem abzuschließenden Zeltinnenraum (17) abgewandte Seite und die Innenseite dem Zeltinnenraum (17) zugewandt ist, wobei vorzugsweise das Traggerüst Dachriegel (6) mit Nuten (11) oder Kederschienen zur Aufnahme von Kedern (12) des Planenverbundes (13, 13', 13") umfasst, und weiter vorzugsweise der Planenverbund (13, 13', 13") zugleich einen Witterungsschutz für den Zeltinnenraum (17) bildet.

15. Industriezelt mit einer weichen Dachhaut, umfassend ein Traggerüst (1) aus Profilstäben, wobei das Traggerüst (1) eine Wandkonstruktion (2) und eine Dachkonstruktion (3) umfasst, und die Dachkonstruktion (3) Pfetten (4, 5, 8) und Riegel (6) umfasst, wobei die Riegel (6) von einer Traufe (8) des Daches zum First (4) verlaufen, wobei ferner zumindest ein Teil der Dachhaut durch einen Planenverbund (13, 13', 13") nach einem der Ansprüche 1 bis 13 gebildet ist.
